# EUROPEAN PATENT APPLICATION

(11) **EP 3 293 980 A1**
(43) Date of publication of application: **14.03.2018**
(21) Application number: 16188208.9
(22) Date of filing: 09.09.2016
(51) Int. Cl.: H04N 21/436, H04N 21/4367, H04N 21/418

(54) **A METHOD TO CREATE A SECURE CHANNEL BETWEEN A HOST DEVICE AND AN EXTERNAL DEVICE**

(71) Applicant: Nagravision S.A., 1033 Cheseaux-sur-Lausanne (CH)
(72) Inventor: DESARZENS, Philippe, 1030 Bussigny (CH); GREMAUD, Fabien, 1618 Châtel-St-Denis (CH); FISCHER, Jean-Bernard, 25370 Rochejean (FR); FISCHER, Nicolas, 1290 Versoix (CH); HUNACEK, Didier, 1807 Blonay (CH)
(74) Representative: Leman Consulting S.A.

(57) **Abstract**

The present disclosure is in the field the access control to multimedia content by a home device, in particular the access to encrypted multimedia content.

It is proposed a method to create a secure channel between a host device and a external device, said external device being in charge of receiving encrypted multimedia content from the host device, to decrypt said multimedia content, re-encrypt it and returning it via the secure channel to the host device, said host device comprising a system on chip (SoC) comprising at least a secure execution environment and a memory, a host processing platform (HPD) comprising at least a central unit, a reception module, a video processing unit and a storage unit, said system on chip comprising a SoC private key and a SoC certificate comprising a SoC type ID, a SoC Binding unique ID and a SoC public key, said host processing platform (HPD) comprising a HPD certificate comprising a HPD type ID, the SoC binding unique ID, the SoC certificate and the HPD certificate being trusted by a common root authority, said method comprising :
- initializing a communication between the external device and the host device,
- receiving, by the external device, the SoC certificate, the Soc unique Binding ID of the Soc and the HPD certificate from the host device,
- checking the binding of the SoC cand the HPD by verifying that the HPD certificate contains the SoC Binding unique ID of the SoC,
- in response to a positive verification, creating a secure channel between the external device and the host device.

## Description

### Introduction

The present disclosure is in the field the access control to multimedia content by a home device, in particular the access to encrypted multimedia content.

### Background

Historically, the access to PayTV programs was possible through the use of an additional device (e.g. Set-top Box), connected to the rendering device (e.g. television), the additional device being in charge of the verification of the rights and the decryption of the multimedia content. This additional device is placed upstream to the rendering device and the multimedia stream is firstly received by the additional device, processed and transferred to the rendering device. Once decrypted, the multimedia content is transferred to the rendering device and displayed.

In another implementation, the additional device is realized in the form of a connectable device (CAM Conditional Access Module) directly connected to the rendering device. The encrypted multimedia stream is received by the rendering device and forwarded to the CAM. This module is in charge of extracting the access conditions linked with the multimedia stream and compare them with the user's rights stored in a secure memory of the CAM. If a match is found, the CAM decrypts the multimedia stream and returns it to the rendering device. The well known standard for this implementation is Cl+.

Today, the preferred connection is USB in view of the increase of data transfer rate allowed by this technology and the worldwide acceptance to all devices.

The security level of the additional device is high since particular care was made to develop secure processing module with counterfeit features to protect the keys or rights stored into the additional device. Once the multimedia content is decrypted by the additional device, it is re-encrypted with a key shared between the additional device and the rendering device.

As a consequence, it is important that the key used to re-encrypt the content is generated with a trusted rendering device.

### Brief description of the figures

The present invention will be better understood with the attached figures, given as non limiting examples, namely:
- figure 1 illustrates the rendering device and the external device
- figure 2 illustrates the chain of certificates of the rendering device
- figure 3 illustrates the standard method of biding the certificates
- figure 4 illustrates an alternate biding method

### Detailed description

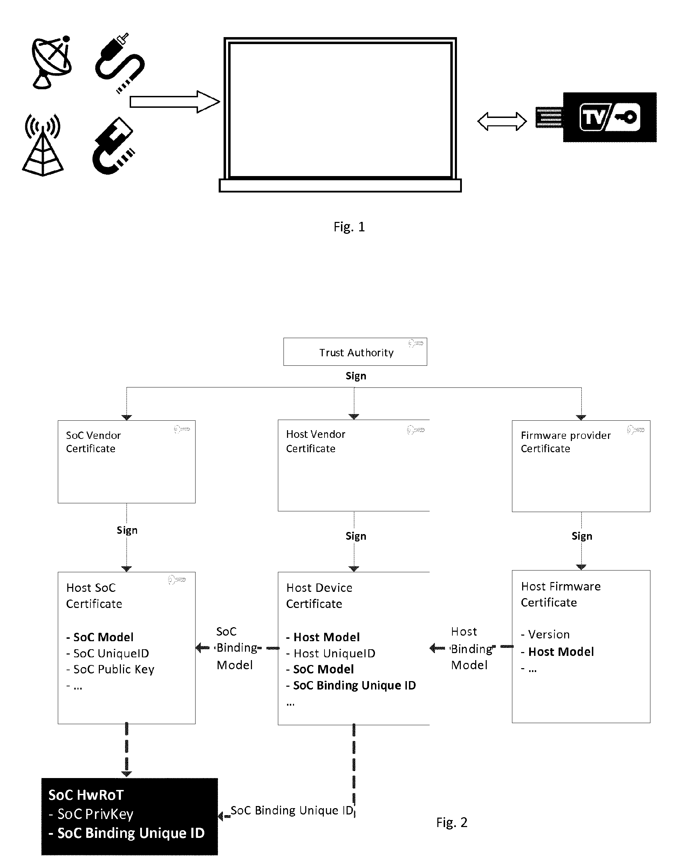

The figure 1 shows the rendering device, here a television, connected with an external device, here in the form of a USB dongle. The multimedia content received by the television is passed to the USB dongle for processing. Once processed, the multimedia content is returned to the rendering device.

The rendering device or host device comprises various components such as :
- a system on chip (SoC) comprising at least a secure execution environment and a memory,
- a processing platform comprising at least a central unit, a reception module, a video processing unit and a storage unit,
- a display.

The additional device comprises various components such as :
- a secure processor with a memory,
- a communication module,
- a decryption module,
- an encryption module.

In order to securely provide a decrypted content to a legit host device, the additional device shall be able to identify and authenticates at least two different components of the hosts; the Host SystemOnChip and the Host Platform Device.

The Host Platform device (HPD) comprises a HPD certificate stored in a memory of the processing platform. This certificate is loaded at the initialisation phase of the host device and is issued by a HPD authority. This certificate is unique per Host Platform device type. This certificate is therefore linked with the hardware of the platform. The certificate contains an HPD identifier and a level of trust defining the level of security of the HPD.

The SystemOnChip (SoC) comprises a SoC certificate stored in the memory of the SoC or the memory of the host. The secure execution environment can be in the form of a Hardware Root of Trust. This certificate is loaded at the manufacturing or during the initialisation phase of the SoC and is issued by a SoC authority. This certificate is unique per SoC and contains a unique per SoC public key for which the corresponding private key is stored in a One Time Programmable secure memory of the SoC only accessible by the secure execution environement of the SoC.. This certificate, via the public/private key is therefore linked with the hardware of the SoC. The certificate contains a SoC identifier (representing the SoC type) and optionally a level of trust defining the level of security of the SoC. In the SoC certificate we have a public key, the private key is programmed at the SoC manufacturing in the Secure memory of the secure execution environment (typically in Onetime Programmable memory).

The storage unit of the host device comprises a firmware loaded at the initialisation of the host device. This firmware can be later updated remotely. The firmware comprises a firmware certificate stored in a dedicated portion of the storage unit. This certificate is loaded at the manufacturing or the initialisation phase of the firmware and is issued by a firmware authority. This certificate is unique per firmware version. This certificate is therefore linked with the current firmware loaded into the storage unit. The certificate contains a firmware identifier (representing the firmware version) and a level of trust defining the level of security of the firmware.

It is to be noted that the SoC certificate, the HPD certificate and the firmware certificated are linked by a common trust authority.

The figure 2 illustrates the way the certificate are generated and linked. A Trust Authority certifies a SoC Vendor. The SoC Vendor can then issue a certificate related to a SoC type. The SoC certificate contains various elements such as the SoC model, a SoC Unique ID and a Soc Public key.

This certificate is stored in a memory of the SoC or in the memory of the host, preferably at the manufacturing step. Preferably, the private key is stored in a secure memory of the SoC.

In a similar manner, the Trust Authority certifies a Host Vendor. The Host Vendor can then issue a certificate related to a HPD type. The HPD certificate is then certified by the Host Vendor and the Trust Authority since the Host Vendor is certified by the Trust Authority. The HPD certificate contains various elements such as the Host model, the Host Unique ID, a Host public key. At the generation of the HPD certificate, the SoC type is known for this Host device and data of the SoC are included into the HPD certificate, namely the SoC Model and the SoC Binding Unique ID.

The SoC binding unique ID value depends on the Binding solution when the device is manufactured:
1- Binding without HSM (standard): SoC binding unique ID is provided in a secure message for the secure execution environment. The Secure execution environment will program the SoC binding unique ID of the secure message in the secure memory of the SoC preferably One Time Programmable. The same SoC binding unique ID also included in the HPD certificate (the pair, SoC binding unique ID programming message and HPD certificate are provided at the same time by trusted authority).
2- Binding with HSM (secure): SoC binding unique ID is programmed at SoC manufacturing. During the manufacturing of the host device, the SoC binding unique ID is retrieved by the HSM from the SoC and included in a HPD certificate which is signed by the HSM of the trust authority. The Binding unique ID can be the unique ID of the SoC or another unique value stored at the manufacturing of said SoC. The certificate loaded into the HPD by the HSM of a host device is bound with the SoC of the same host device.

A HSM is a hardware module provided by the Trust Authority and comprising secure means to generate certificates. The host communicates with the HSM in order to create the strong binding between the SoC and the HPD of the host device.

According to an alternate embodiment, the firmware loaded into the storage unit of the host can be linked in the same manner. A Trust Authority certifies a firmware provider. The firmware provider can then issue a certificate related to a firmware that will be loaded into the host. The firmware certificate contains various elements such as the firmware version. At the generation of the firmware certificate, the host on which the firmware will be loaded is known and data of the Host are included into the firmware certificate, at least the Host Model.

The SoC comprises a secure execution environment (for example a HW Root of Trust) implementing the necessary cryptographic functions to setup a cryptographic secure link with mutual authentication with a similar secure execution environment embedded in the external Device. The SoC secure execution environment may further comprise a SoC Private key and the SoC Binding Unique ID.

A Field upgradable firmware and a Host Device are bound using specific global information signed in their respective certificates; typically the Host model.

As explained above, the external device comprises a secure processor including a Hardware Root of Trust. During the setup of the secure link, the SoC secure execution environment and the External Device secure execution environment are mutually authenticated and their respective public certificates are exchanged and verified.

During the setup of the secure channel, the external device also securely receives the necessary information to also authenticate the Host Device certificate and the bindings to the authenticated SoC certificate. Typically the global and unique binding between, the host device certificate, the host SoC certificate and the SoC binding unique ID of the SoC secure execution environment are verified by the external device. A secure channel can be created by using for example Diffie-Helmann protocol.

Moreover, once the secure channel is setup, the host securely provides its Host Firmware Certificate so that the host capability can be further adapted after Host production. The global binding between the firmware certificate and the host device certificate are verified by the external device.

Figure 2 shows an example of three certificate chain with the Host Device binding to a SoC and the Host Firmware binding to a Host device.
- 1 Host SoC HW secure execution environment: The host SoC embeds a secure execution environment which is personalized with a unique per device private key only accessible by the SoC secure execution environment. Its associated public certificate(s) is signed by a certificate chain and a root key. The Host SoC certificate typically contains a SoC brand & model, a SoC Unique ID and a SoC public Key associated to the SoC private key programmed during the SoC production. Depending on the type of binding, the SoC secure execution environment is also programmed during SoC production with a SoC binding Unique ID.
- 2 Host Device: The Host device embeds a SoC chip and a non-modifiable part of a software which typically are split in different execution environments; a Reach Executable Environment and a Trusted Executable Environment. The Host device needs to be bound to the SoC secure execution environment so that the external device trusts it, the bounding needs to be done at device production. So, the host also has a unique per device certificate which is sign by a certificate chain and a root key but unlike the SoC certificate, the host device does not embeds any private key; it actually relies on the SoC unique private key and the bounding to the SoC secure execution environment. The Host device certificate typically contains the Host device brand & model, a host unique identifier and the necessary information to bind the host device to the host SoC secure execution environment such as the associated SoC binding Unique ID.
- 3 Host Firmware: The host also embeds a Firmware certificates signed by a certificate chain and a root key. The host firmware needs to be bound to the Host Device and shall be located to in the most trusted execution environment of the host. The host firmware can be updgraded after production and typically contains the firmware brand, model & identifier as well as the firmware version. It also contains the necessary information to bind the host firmware to the host device such as the Host binding model.

Two solutions are proposed to securely bind the SoC and the Host during the host production.

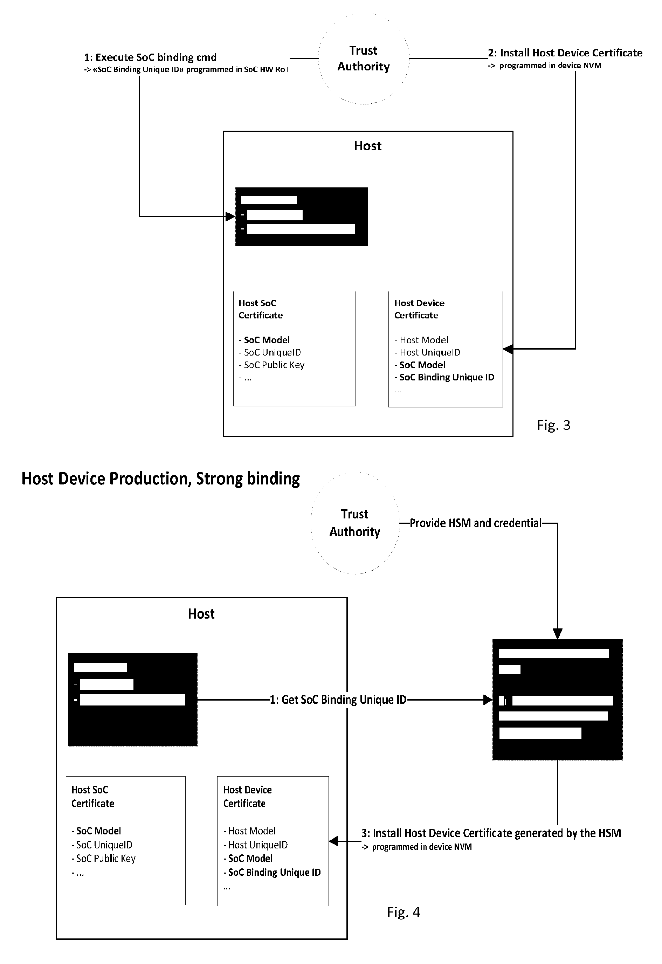

Standard Binding (figure 3): This solution allows any Device certificate with the correct SoC binding model to be binded to a specific SoC. This solution is the preferred when the device manufacturer is trusted. The SoC binding unique ID field of the SoC secure execution environment is programmed during the Device production using a SoC secure execution environment secure programming message associated to the Host Device certificate. The associated Host Device certificate, containing the same SoC binding unique ID, is then programmed in the device.

Strong Binding (figure 4): This solution secures the binding with a specific secure Hardware Secure Module. It prevents the cloning of the device certificates by an untrusted device manufacturer. The SoC binding unique ID in the SoC secure execution environment is programmed during the SoC production. During the device production, the SoC binding unique ID, programmed during the SoC production, is provided to the HSM. The HSM check the credential and built and sign the host device certificate with the received SoC binding unique ID. The host device certificate signed by the HSM, containing the SoC binding unique ID, is then programmed in the device. The secure memory stores a root certificate

According to one embodiment, the SoC certificate further comprises a SoC level of security. During the creation of the secure channel, the external device receives the SoC certificate. The level of security is stored in the memory of the external device. Additionally, the same can be applied to the HPD certificate which can have a similar HPD level of security.

When the secure channel is established, the host device will send multimedia content for decryption. The multimedia content comprises security messages embedding the key to decrypt the audio and video content as well as access rights. The access rights are compared with the user's rights stored into the secure memory of the external device. Additionally, the security message can further comprise a security level requirement. According to an example, the user can have the right to access 4K content but the host device could not be certified for that content. The security level requirement is compared with the SoC security level, the HPD security level and optionally the firmware security level. In case that one of the security level is below the security level requirement, the external device blocks the access to the multimedia content by failing to return the decrypted content.

## Claims

1. A method to create a secure channel between a host device and a external device, said external device being in charge of receiving encrypted multimedia content from the host device, to decrypt said multimedia content, re-encrypt it and returning it via the secure channel to the host device, said host device comprising a system on chip (SoC) comprising at least a secure execution environment and a memory, a host processing platform (HPD) comprising at least a central unit, a reception module, a video processing unit and a storage unit, said system on chip comprising a SoC private key and a SoC certificate comprising a SoC type ID, a SoC Binding unique ID and a SoC public key, said host processing platform (HPD) comprising a HPD certificate comprising a HPD type ID, the SoC binding unique ID, the SoC certificate and the HPD certificate being trusted by a common root authority, said method comprising :
- initializing a communication between the external device and the host device,
- receiving, by the external device, the SoC certificate, the Soc unique Binding ID of the Soc and the HPD certificate from the host device,
- checking the binding of the SoC cand the HPD by verifying that the HPD certificate contains the SoC Binding unique ID of the SoC,
- in response to a positive verification, creating a secure channel between the external device and the host device.

2. The method of claim 1, wherein it comprises a further verification before the creation of the secure channel, said verification comprising : checking that SoC type IF of the Soc certificate is the same as the Soc type ID of the HPD certificate.

3. The method of claim 1 or 2 wherein the host device further comprises a firmware loaded into the storage unit, said firmware comprising a firmware version and a firmware certificate, said firmware certificate comprising the firmware version and the HPD type ID, said method comprising :
- receiving with the SoC certificate and the HPD certificate, the firmware certificate by the external device,
- the checking further comprising the verification that the firmware certificate contains the HPD type ID contained in the HPD certificate.
